# EUROPEAN PATENT SPECIFICATION

(11) **EP 3 015 689 B1**
(45) Date of publication and mention of the grant of the patent: **01.08.2018**
(21) Application number: 13888360.8
(22) Date of filing: 26.06.2013
(51) Int. Cl.: F02D 41/22, F02D 41/18, E02F 9/20, F02M 35/024, F02M 35/10, F02M 35/09, F02D 41/12, F02D 31/00

(54) **DEVICE AND METHOD FOR CONTROLLING ENGINE RPM FOR CONSTRUCTION MACHINERY**
VORRICHTUNG UND VERFAHREN ZUR STEUERUNG EINER MOTORDREHZAHL FÜR BAUMASCHINEN
DISPOSITIF ET PROCÉDÉ POUR COMMANDER UNE VITESSE DE ROTATION DE MOTEUR POUR MACHINE DE CONSTRUCTION

(43) Date of publication of application: 04.05.2016
(73) Proprietor: Volvo Construction Equipment AB, 631 85 Eskilstuna (SE)
(72) Inventor: NAM, Chan-Ung, Changwon-si Gyeongsangnam-do 645-330 (KR)
(74) Representative: Zimmermann, Tankred Klaus
(86) International application number: PCT/KR2013/005629
(87) International publication number: WO 2014/208786

(56) References cited:
- EP-A1- 2 283 219
- EP-A2- 2 060 681
- JP-A- H06 299 916
- KR-A- 19980 034 303
- KR-A- 20020 042 136
- KR-A- 20020 042 136
- KR-A- 20090 049 334
- US-A- 5 205 261
- US-A1- 2008 003 896

## Description

### TECHNICAL FIELD

The present invention relates to an apparatus and a method for controlling engine RPM (Revolutions Per Minute) for a construction machine, and more particularly, to an apparatus and a method for controlling engine RPM, which can compulsorily decrease the engine RPM when an air filter clogging signal is generated.

### BACKGROUND OF THE INVENTION

Generally, in a construction site where earth or particulate matter is scattered, a large amount of dust may be sucked into an internal combustion engine of a construction machine. In particular, dust that is sucked into an engine combustion chamber may be caught between a piston that performs high-speed reciprocating motion and a cylinder wall, and may not only serve as an abrasive in the engine but also cause an combustion operation to deteriorate.

An air cleaner that is used to protect the engine against dust may be classified into a dry air cleaner, an oil bath air cleaner, and a wet air cleaner, and require periodic inspection in order to heighten its efficiency as a filtering device.

On the other hand, in an engine intake line that is applied to the engine for a construction machine, an air, from which dust is removed through a filter of the air cleaner, is supplied to the engine combustion chamber through an engine intake manifold. Further, a pressure switch is mounted on the engine intake line, and an operator in a cabin is notified of a replacement or repair time of the filter of the air cleaner in accordance with pressure setting values.

On the other hand, even in the case where an engine protection function is provided to notify the operator of the filter replacement or repair time in accordance with filter clogging, a function of actually checking an engine operating time may not be provided. That is, in the case where an engine start is stopped while a work is done after the filter clogging is warned, data of the engine operating time after the warning of the filter clogging is not stored, but is erased to become zero. Due to this, exceeding of the filter replacement or repair time may frequently occur after the lapse of a predetermined time after the warning of the filter clogging.

If the filter of the air cleaner is not timely replaced due to carelessness of an operator, dust or foreign substances accumulated in the filter may get out of the filter and may be sucked into the engine due to an increase of internal pressure of the filter when an engine RPM is increased. In this case, engine components, such as cylinders, may be worn down or damaged.

Japanese Patent Laid-Open Publication No. 2005-344533 (published on December 15, 2005) discloses a method for notifying an operator of an exchange time of an air cleaner for an engine through detection of clogging of the air cleaner. However, in the case where the air cleaner is damaged or leak occurs in an intake duct that is arranged between the air cleaner and the internal combustion engine, the internal combustion engine may be excessively worn out. In this case, dust leak may be overlooked until the internal combustion engine is seriously worn out, and thus an operator may miss the replacement time of the air cleaner.

EP 2 060 681 A2 discloses a system for controlling engine revolutions of an excavator, which can set the excavator not to perform a normal operation so as to induce an operator to check an air cleaner by reducing a flow rate of hydraulic fluid discharged from a hydraulic pump through lowering the engine revolutions if an operator disregards a warning signal for requiring the operator to check an engine intake system and continues the excavators work even when a predetermined time elapses after transfer of the warning signal or the warning signal is transferred over a predetermined number of times.

KR 2002 0042136 A discloses an alarm system for alarming the replacement time of an air filter in a vehicle without a dust sensor.

US 5 205 261 A discloses an apparatus for operating an internal combustion engine. The apparatus includes a sensor adapted to sense a level of clogging of an air filter. The maximum engine horsepower is limited if an output of the sensor exceeds a threshold.

EP 2 283 219 A1 relates to a method for determining a filter condition using pressure measurements in an intake manifold before and after an engine is started. A difference of the measurements is an indication of the condition of the air filter.

### SUMMARY OF THE INVENTION

Accordingly, the present invention has been made to solve the above-mentioned problems occurring in the related art, and one subject to be achieved by the present invention is to provide an apparatus and a method for controlling engine RPM, which can repair or replace an air filter when an air filter clogging signal is generated.

### TECHNICAL SOLUTION

In accordance with an aspect of the present invention, there is provided a method for controlling engine RPM for a construction machine including an engine, an air filter filtering dust in outdoor air that is sucked into an engine combustion chamber, an air filter clogging switch sensing pressure of the air sucked into the engine combustion chamber through the air filter, an engine electronic control unit (E-ECU), and a vehicle electronic control unit (V-ECU), which includes determining whether the air filter is clogged in accordance with a signal from the air filter clogging switch; continuously accumulating an engine operating time without initializing the engine operating time even if an engine start is turned off after the air filter clogging signal is generated; determining whether the air filter is repaired or replaced if the accumulated engine operating time exceeds a predetermined time after the air filter clogging signal is generated; applying a control signal from the V-ECU to the E-ECU to compulsorily decrease the engine RPM to predetermined RPM if the air filter is not repaired or replaced in a state where the accumulated engine operating time exceeds the predetermined time; and decreasing the engine RPM to the predetermined RPM in accordance with the control signal that is applied from the E-ECU to an engine driving unit.

The method for controlling engine RPM according to the aspect of the present invention may further include notifying an operator of a repair or replacement time of the air filter through an instrument cluster electronic control unit (I-ECU) if the air filter clogging signal is generated.

The method for controlling engine RPM according to the aspect of the present invention may further include additionally decreasing the engine RPM to other predetermined RPM having a smaller value than or a different value from the predetermined RPM if the air filter is not repaired or replaced even in the case where the engine operating time exceeds another predetermined time after the engine RPM is decreased to the predetermined RPM.

The method for controlling engine RPM according to the aspect of the present invention may further include notifying an operator of information on the decrease of the engine RPM through an instrument cluster electronic control unit (I-ECU) if the engine RPM is decreased to the predetermined RPM at stages.

The engine RPM may be decreased to the predetermined RPM if the air filter is not repaired or replaced in the case where the engine operating time exceeds the predetermined time after the driving of the engine after the air filter clogging signal is generated, and the engine RPM may be additionally decreased if the air filter is not repaired or replaced even in the case where the engine operating time exceeds the other predetermined time after the driving of the engine after the engine RPM is decreased to the predetermined RPM.

In accordance with another aspect of the present invention, there is provided an apparatus for controlling engine RPM for a construction machine including an engine and an air filter filtering dust in outdoor air that is sucked into an engine combustion chamber, which includes an air filter clogging switch configured to sense pressure of the air sucked into the engine combustion chamber through the air filter; a timer configured to measure an engine operating time from a moment when an air filter clogging signal is generated from the air filter clogging switch; a memory configured to store the engine operating time measured by the timer and maintaining the stored value even if an engine start is turned off; a vehicle electronic control unit (V-ECU) configured to output a control signal for compulsorily decreasing the engine RPM to predetermined RPM if the air filter is not repaired or replaced in a state where the engine operating time exceeds the predetermined RPM after the air filter clogging signal is generated; and an engine electronic control unit (E-ECU) configured to apply a control signal to an engine driving unit to decrease the engine RPM to the predetermined RPM in accordance with the control signal from the V-ECU.

The apparatus for controlling engine RPM according to the aspect of the present invention may further include an instrument cluster electronic control unit (I-ECU) notifying an operator of a repair or replacement time of the air filter or notifying the operator of information on the decrease of the engine RPM to the predetermined RPM if the air filter clogging signal is generated.

The E-ECU may apply a control signal to the engine driving unit to decrease the engine RPM to the predetermined RPM if the air filter is not repaired or replaced after the air filter clogging signal is generated, and to additionally decrease the engine RPM to other predetermined RPM having a smaller value than or a different value from the predetermined RPM if the air filter is not repaired or replaced even in the case where the engine operating time exceeds another predetermined time after the engine RPM is decreased to the predetermined RPM.

The E-ECU may apply the control signal to the engine driving unit to decrease the engine RPM to the predetermined RPM if the air filter is not repaired or replaced in the case where the engine operating time exceeds the predetermined time after the driving of the engine after the air filter clogging signal is generated, and to additionally decrease the engine RPM if the air filter is not repaired or replaced even in the case where the engine operating time exceeds the other predetermined time after the driving of the engine after the engine RPM is decreased to the predetermined RPM.

### ADVANTAGEOUS EFFECT

According to the embodiment of the present invention having the above-described configuration, since the engine RPM is decreased enough to interfere with a work if the air filter is not repaired or replaced due to carelessness of the operator after the air filter clogging signal is generated, the operator can be guided to do the work after repairing or replacing the air filter, and thus the engine components (e.g., piston rings) can be protected.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a block diagram of an apparatus for controlling engine RPM according to an embodiment of the present invention;
Fig. 2 is a diagram explaining control of an engine RPM in steps in a method for controlling engine RPM for a construction machine according to an embodiment of the present invention; and
Fig. 3 is a flowchart illustrating a method for controlling engine RPM for a construction machine according to an embodiment of the present invention.

### *Explanation of reference numerals for main parts in the drawing

10: engine
11: air filter
12: air filter clogging switch
13: engine electronic control unit (E-ECU)
14: vehicle electronic control unit (V-ECU)
15: instrument cluster electronic control unit (I-ECU)
16: timer

### DETAILED DESCRIPTION OF THE INVENTION

Hereinafter, a method for controlling engine RPM for a construction machine in accordance with a preferred embodiment of the present invention will be described in detail with reference to the accompanying drawings.

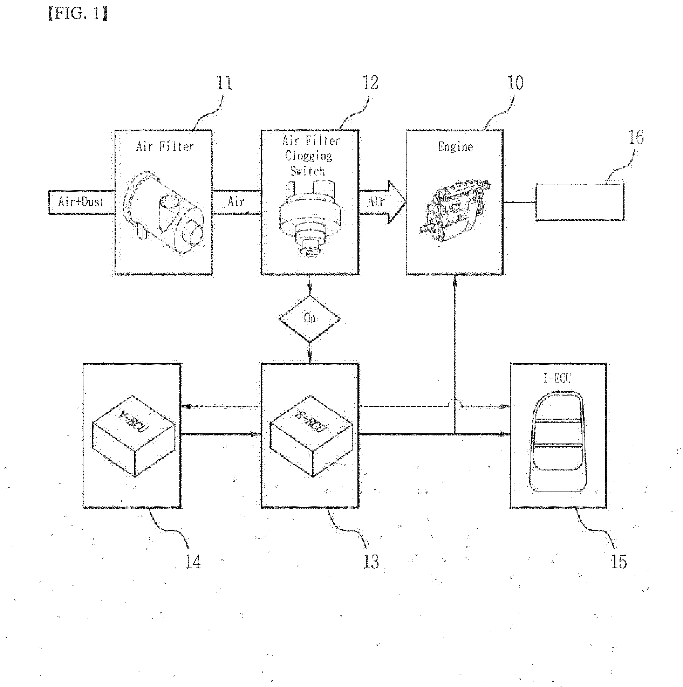

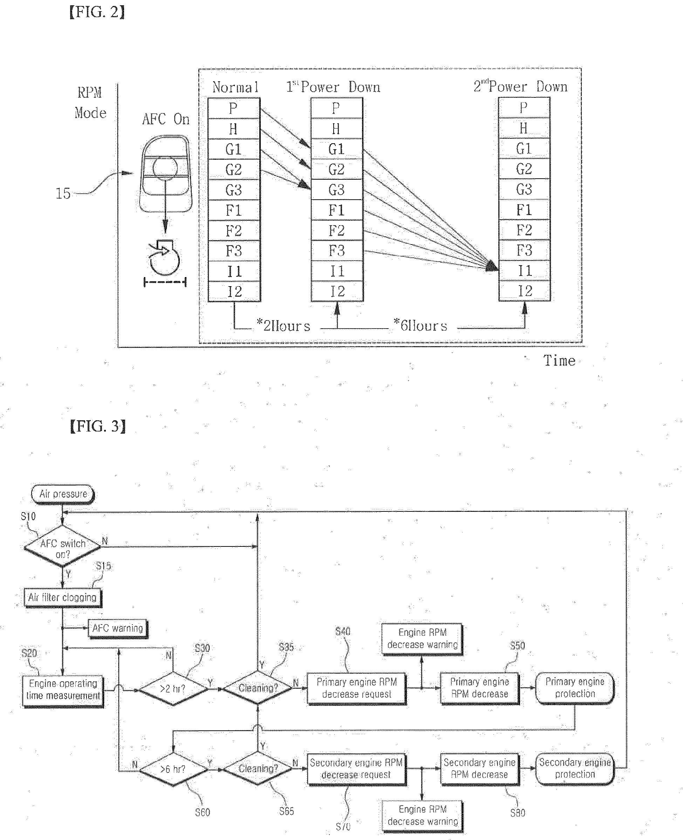

Fig. 1 is a block diagram of an apparatus for controlling engine RPM according to an embodiment of the present invention. Fig. 2 is a diagram explaining control of an engine RPM in steps in a method for controlling engine RPM for a construction machine according to an embodiment of the present invention, and Fig. 3 is a flowchart illustrating a method for controlling engine RPM for a construction machine according to an embodiment of the present invention.

Referring to Figs. 1 to 3, according to an embodiment of the present invention, a method for controlling engine RPM for a construction machine including an engine 10, an air filter 11 filtering dust in outdoor air that is sucked into an engine combustion chamber, an air filter clogging switch 12 sensing pressure of the air sucked into the engine combustion chamber through the air filter 11, an engine electronic control unit (E-ECU) 13, and a vehicle electronic control unit (V-ECU) 14, includes determining whether the air filter 11 is clogged in accordance with a signal from the air filter clogging switch 12 (S10); continuously accumulating an engine operating time without initializing the engine operating time even if an engine start is turned off after the air filter clogging signal is generated (S20); determining whether the air filter 11 is repaired or replaced if the accumulated engine operating time exceeds a predetermined time after the air filter clogging signal is generated (S30); applying a control signal from the V-ECU 14 to the E-ECU 13 to compulsorily decrease the engine RPM to predetermined RPM if the air filter 11 is not repaired or replaced in a state where the accumulated engine operating time exceeds the predetermined time (S40); and decreasing the engine RPM to the predetermined RPM in accordance with the control signal that is applied from the E-ECU 13 to an engine driving unit (S50).

The method for controlling engine RPM may further include notifying an operator of a repair or replacement time of the air filter 11 through an instrument cluster electronic control unit (I-ECU) 15 if the air filter clogging signal is generated.

The method for controlling engine RPM may further include decreasing the engine RPM to a predetermined RPM if the air filter 11 is not repaired or replaced even in the case where the engine operating time exceeds a predetermined time after the air filter clogging signal is generated, and additionally decreasing the engine RPM to other predetermined RPM having a smaller value than or a different value from the predetermined RPM if the air filter 11 is not repaired or replaced even in the case where the engine operating time exceeds another predetermined time after the engine RPM is decreased to the predetermined RPM.

The method for controlling engine RPM may further include notifying an operator of information on the decrease of the engine RPM through an I-ECU 15 if the engine RPM is decreased to the predetermined RPM at stages.

The engine RPM may be decreased to the predetermined RPM if the air filter 11 is not repaired or replaced in the case where the engine operating time exceeds the predetermined time after the driving of the engine 10 after the air filter clogging signal is generated, and the engine RPM may be additionally decreased if the air filter 11 is not repaired or replaced even in the case where the engine operating time exceeds the other predetermined time after the driving of the engine 10 after the engine RPM is decreased to the predetermined RPM.

According to an embodiment of the present invention, an apparatus for controlling engine RPM for a construction machine including an engine 10 and an air filter 11 filtering dust in outdoor air that is sucked into an engine combustion chamber, includes an air filter clogging switch 12 configured to sense pressure of the air sucked into the engine combustion chamber through the air filter 11; a timer 16 configured to measure an engine operating time from a moment when an air filter clogging signal is generated from the air filter clogging switch 12; a nonvolatile memory (not illustrated) configured to store the engine operating time measured by the timer 16 and maintaining the stored value even if an engine start is turned off; a vehicle electronic control unit (V-ECU) 14 configured to output a control signal for compulsorily decreasing the engine RPM to predetermined RPM if the air filter 11 is not repaired or replaced in a state where the engine operating time exceeds the predetermined RPM after the air filter clogging signal is generated; an engine electronic control unit (E-ECU) 13 configured to apply a control signal to an engine driving unit to decrease the engine RPM to the predetermined RPM in accordance with the control signal from the V-ECU 14; and an instrument cluster electronic control unit (I-ECU) 15 notifying an operator of a repair or replacement time of the air filter 11 or notifying the operator of information on the decrease of the engine RPM to the predetermined RPM if the air filter clogging signal is generated.

The E-ECU 13 may apply a control signal to the engine driving unit to decrease the engine RPM to the predetermined RPM if the air filter 11 is not repaired or replaced after the air filter clogging signal is generated, and to additionally decrease the engine RPM to other predetermined RPM having a smaller value than or a different value from the predetermined RPM if the air filter 11 is not repaired or replaced even in the case where the engine operating time exceeds another predetermined time after the engine RPM is decreased to the predetermined RPM.

The E-ECU 13 may apply the control signal to the engine driving unit to decrease the engine RPM to the predetermined RPM if the air filter 11 is not repaired or replaced in the case where the engine operating time exceeds the predetermined time after the driving of the engine 10 after the air filter clogging signal is generated, and to additionally decrease the engine RPM if the air filter 11 is not repaired or replaced even in the case where the engine operating time exceeds the other predetermined time after the driving of the engine 10 after the engine RPM is decreased to the predetermined RPM.

According to the above-described configuration, foreign substances, such as dust and particulate matter, included in the air are filtered by the air filter 11, and the air, from which the foreign substances have been removed, is sucked into the engine combustion chamber through the air filter clogging switch 12. In this case, whether the air filter 11 is clogged is determined by a signal from the air filter clogging switch 12 (S10). The air filter clogging switch 12 is turned on/off in accordance with pressure that is generated due to dust that is accumulated in the air filter 11. That is, if the accumulated dust amount is large and the pressure becomes higher than a predetermined pressure value, the air filter clogging switch 12 is turned on (corresponding to a state where the air filter 11 is polluted and replacement or cleaning of the air filter 11 is required), whereas if the accumulated dust amount is small and the pressure becomes lower than the predetermined pressure value, the air filter clogging switch 12 is turned off.

That is, if the air filter 11 is clogged through the signal that is input from the air filter clogging switch 12 to the engine electronic control unit (E-ECU) 13 (S15), the clogging signal of the air filter 11 is transmitted to the vehicle electronic control unit (V-ECU) 14 and the instrument cluster electronic control unit (I-ECU) 15.

In this case, an operating time of the engine 10 is measured by the timer 16 from the moment when the clogging signal of the air filter 11 is generated (S20). The operating time of the engine 10 that is measured by the timer 16 is stored in the nonvolatile memory, and even in the case of turning off the engine 10 after the clogging signal of the air filter 11 is generated, the operating time of the engine 10 is continuously accumulated through counting. The nonvolatile memory may be a flash memory, an FRAM (Ferroelectric Random Access Memory), or a PRAM (Phase-change Random Access Memory).

The clogging signal of the air filter 11 is transmitted to the V-ECU 14, and after the clogging signal of the air filter 11 is generated, the V-ECU 14 determines whether the operating time of the engine 10 that is measured by the timer 16 exceeds a predetermined time (S30).

If the accumulated operating time of the engine 10 exceeds the predetermined time after the clogging signal of the air filter 11 is generated, the processing proceeds to S35, whereas if the accumulated operating time of the engine 10 does not exceeds the predetermined time, the processing proceeds to S20.

As in S35, it is determined whether the air filter 11 is repaired or replaced, and if the air filter 11 is repaired or replaced, the processing proceeds to S10, whereas if the air filter 11 is not repaired or replaced, the processing proceeds to S40.

As in S40, if the air filter 11 is not repaired or replaced in a state where the accumulated operating time of the engine 10 exceeds the predetermined time, a control signal is applied from the V-ECU 14 to the E-ECU 13 to compulsorily decrease the engine RPM to predetermined RPM.

That is, if the air filter 11 is not repaired or replaced even in a state where the accumulated operating time of the engine 10 exceeds the predetermined time (e.g., two hours) after the clogging signal of the air filter 11 is generated, a control signal is applied from the E-ECU 13 to the engine driving unit so as to compulsorily decrease the engine RPM to the predetermined RPM.

In this case, information on the decrease of the engine RPM to the predetermined RPM is notified to an operator through the I-ECU 15.

The engine RPM is primarily decreased to the predetermined RPM by the control signal that is applied from the E-ECU 13 to the engine driving unit. As an example, as shown in Fig. 2, 2000 engine RPM in a "P" mode that corresponds to a normal state of the construction machine is decreased to 1800 engine RPM in a "G1" mode.

As described above, if an operator does not repair or replace the air filter 11 even in a state where the accumulated operating time of the engine 10 exceeds the predetermined time after the clogging signal of the air filter 11 is generated, the engine RPM is compulsorily decreased from 2000 RPM to 1800 RPM by the control signal is applied from the E-ECU 13 to the engine driving unit (S50).

Accordingly, if the work is continuously done in a state where the operating time of the engine 10 exceeds the predetermined time after the clogging signal of the air filter 11 is generated, the engine RPM is compulsorily decreased enough to interfere with the work, and thus the user may clean or replace the air filter 11 to protect the engine.

As in S60, it is determined whether the operating time of the engine 10 that is measured by the timer 16 exceeds another predetermined time through the V-ECU 14 after the engine RPM is primarily decreased. If the operating time of the engine 10 exceeds the other predetermined time, the processing proceeds to S65, whereas if the operating time of the engine 10 does not exceed the other predetermined time, the processing proceeds to S20.

As in S65, if the air filter 11 is repaired or replaced in a state where the operating time of the engine 10 exceeds the other predetermined time, the processing proceeds to S35, whereas if the air filter 11 is not repaired or replaced in a state where the operating time of the engine 10 exceeds the other predetermined time, the processing proceeds to S70.

As in S70, if the air filter 11 is not repaired or replaced in a state where the operating time of the engine 10 exceeds the other predetermined time (e.g., 6 hours), a control signal from the V-ECU 14 is applied to the E-ECU 13 so as to compulsorily decrease the engine RPM to another predetermined RPM having a smaller value than the predetermined RPM.

As in S80, the engine RPM is secondarily decreased by the control signal that is applied from the E-ECU 13 to the engine driving unit. As an example, 1800 engine RPM in "G1" mode, 1700 engine RPM in "G2" mode, and 1600 engine RPM in "G3" mode, which have been primarily decreased, are decreased to 1000 RPM in "I1" mode (idling state).

Accordingly, if the work is continuously done in a state where the operating time of the engine 10 exceeds the other predetermined time after the clogging signal of the air filter 11 is generated, the engine RPM is compulsorily decreased so that the work is unable to be normally done by the control signal that is applied from the E-ECU 13 to the engine driving unit, and thus the user may clean or replace the air filter 11 after stopping the work to protect the engine.

### INDUSTRIAL APPLICABILITY

According to the present invention having the above-described configuration, if the air filter is not repaired or replaced even in a state where the predetermined engine operating time elapses after the air filter clogging signal is generated, the engine RPM is compulsorily decreased to be in an idling mode, and thus the operator can be guided to do the work after repairing or replacing the air filter to prevent an engine piston ring or a cylinder from being worn out or being damaged.

## Claims

1. A method for controlling engine revolutions per minute for a construction machine including an engine (10), an air filter (11) filtering dust in outdoor air that is sucked into an engine combustion chamber, an air filter clogging switch (12) sensing pressure of the air sucked into the engine combustion chamber through the air filter (11), an engine electronic control unit (13), and a vehicle electronic control unit (14), the method comprising:
determining whether the air filter (11) is clogged in accordance with a signal from the air filter clogging switch (12);
continuously accumulating an engine operating time without initializing the engine operating time even if an engine start is turned off after the air filter clogging signal is generated;
determining whether the air filter (11) is repaired or replaced if the accumulated engine operating time exceeds a predetermined time after the air filter clogging signal is generated;
applying a control signal from the vehicle electronic control unit (14) to the engine electronic control unit (13) to compulsorily decrease the engine revolutions per minute to predetermined engine revolutions per minute if the air filter (11) is not repaired or replaced in a state where the accumulated engine operating time exceeds the predetermined time; and
decreasing the engine revolutions per minute to the predetermined revolutions per minute in accordance with the control signal that is applied from the engine electronic control unit (13) to an engine driving unit.

2. The method according to claim 1, further comprising notifying an operator of a repair or replacement time of the air filter (11) through an instrument cluster electronic control unit (15) if the air filter clogging signal is generated.

3. The method according to claim 1, further comprising additionally decreasing the engine revolutions per minute to other predetermined engine revolutions per minute having a smaller value than or a different value from the predetermined engine revolutions per minute if the air filter (11) is not repaired or replaced even in the case where the engine operating time exceeds another predetermined time after the engine revolutions per minute is decreased to the predetermined engine revolutions per minute.

4. The method according to claim 3, further comprising notifying an operator of information on the decrease of the engine revolutions per minute through an instrument cluster electronic control unit (15) if the engine revolutions per minute is decreased to the predetermined engine revolutions per minute at stages.

5. An apparatus for controlling engine revolutions per minute for a construction machine including an engine (10) and an air filter (11) filtering dust in outdoor air that is sucked into an engine combustion chamber, the apparatus comprising:
an air filter clogging switch (12) configured to sense pressure of the air sucked into the engine combustion chamber through the air filter (11);
a timer (16) configured to measure an engine operating time from a moment when an air filter clogging signal is generated from the air filter clogging switch (12);
a memory configured to store the engine operating time measured by the timer and maintaining the stored value even if an engine start is turned off;
a vehicle electronic control unit (14) configured to output a control signal for compulsorily decreasing the engine revolutions per minute to predetermined engine revolutions per minute if the air filter (11) is not repaired or replaced in a state where the engine operating time exceeds the predetermined engine revolutions per minute after the air filter clogging signal is generated; and
an engine electronic control unit (13) configured to apply a control signal to an engine driving unit to decrease the engine revolutions per minute to the predetermined engine revolutions per minute in accordance with the control signal from the vehicle electronic control unit (14).

6. The apparatus according to claim 5, wherein the engine electronic control unit (13) applies a control signal to the engine driving unit to decrease the engine revolutions per minute to the predetermined engine revolutions per minute if the air filter (11) is not repaired or replaced after the air filter clogging signal is generated, and to additionally decrease the engine revolutions per minute to other predetermined engine revolutions per minute having a smaller value than or a different value from the predetermined engine revolutions per minute if the air filter (11) is not repaired or replaced even in the case where the engine operating time exceeds another predetermined time after the engine revolutions per minute is decreased to the predetermined engine revolutions per minute.

7. The apparatus according to claim 5, further comprising an instrument cluster electronic control unit (15) notifying an operator of a repair or replacement time of the air filter (11) or notifying the operator of information on the decrease of the engine revolutions per minute to the predetermined engine revolutions per minute if the air filter clogging signal is generated.

## Patentansprüche

1. Ein Verfahren zum Steuern einer Drehzahl für eine Baumaschine mit einem Motor (10), einem Luftfilter (11), das Staub in Außenluft filtert, die in eine Motorverbrennungskammer eingesaugt wird, einem Luftfilterverstopfungsschalter (12), der einen Druck der Luft erfasst, die durch das Luftfilter (11) in die Motorverbrennungskammer eingesaugt wird, einer elektronischen Motorsteuereinheit (13) und einer elektronischen Fahrzeugsteuereinheit (14), wobei das Verfahren folgende Schritte aufweist:
Bestimmen, ob das Luftfilter (11) verstopft ist, gemäß einem Signal von dem Luftfilterverstopfungsschalter (12);
fortwährendes Ansammeln einer Motorbetriebszeit ohne Initialisierung der Motorbetriebszeit, selbst wenn ein Motorstart abgeschaltet wird, nachdem das Luftfilterverstopfungssignal erzeugt wurde;
Bestimmen, ob das Luftfilter (11) repariert oder ausgetauscht wird, wenn die angesammelte Motorbetriebszeit eine vorbestimmte Zeit überschreitet, nachdem das Luftfilterverstopfungssignal erzeugt wurde;
Anlegen eines Steuersignals von der elektronischen Fahrzeugsteuereinheit (14) an die elektronische Motorsteuereinheit (13), um die Motordrehzahl zwingend auf eine vorbestimmte Motordrehzahl zu senken, wenn das Luftfilter (11) nicht repariert oder ausgetauscht wird, in einem Zustand, in dem die angesammelte Motorbetriebszeit die vorbestimmte Zeit überschreitet; und
Senken der Motordrehzahl auf die vorbestimmte Drehzahl gemäß dem Steuersignal, das von der elektronischen Motorsteuereinheit (13) an eine Motorantriebseinheit angelegt wird.

2. Das Verfahren gemäß Anspruch 1, das ferner ein Benachrichtigen eines Bedieners über eine Reparatur- oder Austauschzeit des Luftfilters (11) durch eine elektronische Instrumentengruppensteuereinheit (15) aufweist, wenn das Luftfilterverstopfungssignal erzeugt wurde.

3. Das Verfahren gemäß Anspruch 1, das ferner ein zusätzliches Senken der Motordrehzahl auf eine andere vorbestimmte Motordrehzahl mit einem kleineren Wert oder einem unterschiedlichen Wert als der vorbestimmten Motordrehzahl aufweist, wenn das Luftfilter (11) nicht repariert oder ausgetauscht wird, selbst in dem Fall, in dem die Motorbetriebszeit eine andere vorbestimmte Zeit überschreitet, nachdem die Motordrehzahl auf die vorbestimmte Motordrehzahl gesenkt wurde.

4. Das Verfahren gemäß Anspruch 3, das ferner ein Benachrichtigen eines Bedieners über Informationen über die Senkung der Motordrehzahl durch eine elektronische Instrumentengruppensteuereinheit (15) aufweist, wenn die Motordrehzahl in Schritten auf die vorbestimmte Motordrehzahl gesenkt wird.

5. Eine Vorrichtung zum Steuern einer Motordrehzahl für eine Baumaschine mit einem Motor (10) und einem Luftfilter (11), das Staub in Außenluft filtert, die in eine Motorverbrennungskammer eingesaugt wird, wobei die Vorrichtung folgende Merkmale aufweist:
einen Luftfilterverstopfungsschalter (12), der ausgebildet ist, um einen Druck der Luft zu erfassen, die durch das Luftfilter in die Motorverbrennungskammer eingesaugt wird;
einen Zeitgeber (16), der ausgebildet ist, um eine Motorbetriebszeit von einem Moment an zu messen, in dem ein Luftfilterverstopfungssignal von dem Luftfilterverstopfungsschalter (12) erzeugt wird;
einen Speicher, der ausgebildet ist, um die Motorbetriebszeit, die durch den Zeitgeber gemessen wird, zu speichern, und den gespeicherten Wert selbst dann beibehält, wenn ein Motorstart abgeschaltet wird;
eine elektronische Fahrzeugsteuereinheit (14), die ausgebildet ist, um ein Steuersignal zum zwingenden Senken der Motordrehzahl auf eine vorbestimmte Motordrehzahl auszugeben, wenn das Luftfilter (11) nicht repariert oder ausgetauscht wird, in einem Zustand, in dem die Motorbetriebszeit die vorbestimmte Motordrehzahl überschreitet, nachdem das Luftfilterverstopfungssignal erzeugt wurde; und
eine elektronische Motorsteuereinheit (13), die ausgebildet ist, um ein Steuersignal an eine Motorantriebseinheit anzulegen, um die Motordrehzahl auf die vorbestimmte Motordrehzahl zu senken, gemäß dem Steuersignal von der elektronischen Fahrzeugsteuereinheit (14).

6. Die Vorrichtung gemäß Anspruch 5, bei der die elektronische Motorsteuereinheit (13) ein Steuersignal an die Motorantriebseinheit anlegt, um die Motordrehzahl auf die vorbestimmte Motordrehzahl zu senken, wenn das Luftfilter (11) nicht repariert oder ausgetauscht wird, nachdem das Luftfilterverstopfungssignal erzeugt wurde, und um zusätzlich die Motordrehzahl auf eine andere vorbestimmte Motordrehzahl mit einem kleineren Wert oder einem unterschiedlichen Wert als der vorbestimmten Drehzahl zu senken, wenn das Luftfilter (11) nicht repariert oder ausgetauscht wird, selbst in dem Fall, in dem die Motorbetriebszeit eine andere vorbestimmte Zeit überschreitet, nachdem die Motordrehzahl auf die vorbestimmte Motordrehzahl gesenkt wurde.

7. Die Vorrichtung gemäß Anspruch 5, die ferner eine elektronische Instrumentengruppensteuereinheit (15) aufweist, die einen Bediener über eine Reparatur- oder Austauschzeit des Luftfilters (11) benachrichtigt oder den Bediener über Informationen über die Senkung der Motordrehzahl auf die vorbestimmte Motordrehzahl benachrichtigt, wenn das Luftfilterverstopfungssignal erzeugt wird.

## Revendications

1. Procédé pour commander une vitesse de rotation de moteur pour une machine de construction comportant un moteur (10), un filtre à air (11) filtrant la poussière dans l'air extérieur qui est aspiré dans une chambre de combustion de moteur, un interrupteur de colmatage de filtre à air (12) détectant la pression de l'air aspiré dans la chambre de combustion de moteur à travers le filtre à air (11), une unité de commande électronique de moteur (13) et une unité de commande électronique de véhicule (14), le procédé comprenant le fait de:
déterminer si le filtre à air (11) est colmaté selon un signal de l'interrupteur de colmatage de filtre à air (12);
accumuler en continu un temps de fonctionnement de moteur sans initialiser le temps de fonctionnement de moteur, même si un démarrage de moteur est désactivé après que soit généré le signal de colmatage de filtre à air;
déterminer si le filtre à air (11) est réparé ou remplacé si le temps de fonctionnement de moteur accumulé excède un temps prédéterminé après que soit généré le signal de colmatage de filtre à air;
appliquer un signal de commande de l'unité de commande électronique de véhicule (14) à l'unité de commande électronique de moteur (13) pour réduire obligatoirement la vitesse de rotation de moteur à une vitesse de rotation de moteur prédéterminée si le filtre à air (11) n'est pas réparé ou remplacé dans un état où le temps de fonctionnement de moteur accumulé excède le temps prédéterminé; et
réduire la vitesse de rotation de moteur à la vitesse de rotation prédéterminée selon le signal de commande qui est appliqué par l'unité de commande électronique de moteur (13) à une unité d'entraînement de moteur.

2. Procédé selon la revendication 1, comprenant par ailleurs le fait de notifier à un opérateur un temps de réparation ou de remplacement du filtre à air (11) à travers une unité de commande électronique de groupe d'instruments (15) si le signal de colmatage du filtre à air est généré.

3. Procédé selon la revendication 1, comprenant par ailleurs le fait de réduire davantage la vitesse de rotation de moteur à une autre vitesse de rotation de moteur prédéterminée présentant une valeur inférieure à ou une valeur différente de la vitesse de rotation de moteur prédéterminée si le filtre à air (11) n'est pas réparé ou remplacé, même au cas où le temps de fonctionnement de moteur excède un autre temps prédéterminé après que la vitesse de rotation de moteur soit réduite à la vitesse de rotation de moteur prédéterminée.

4. Procédé selon la revendication 3, comprenant par ailleurs le fait de notifier à un opérateur les informations sur la réduction de la vitesse de rotation de moteur à travers une unité de commande électronique de groupe d'instruments (15) si la vitesse de rotation de moteur est réduite à la vitesse de rotation de moteur prédéterminée par étapes.

5. Appareil pour commander la vitesse de rotation de moteur pour une machine de construction comportant un moteur (10) et un filtre à air (11) filtrant la poussière dans l'air extérieur aspiré dans une chambre de combustion de moteur, l'appareil comprenant:
un interrupteur de colmatage de filtre à air (12) configuré pour détecter la pression de l'air aspiré dans la chambre de combustion de moteur à travers le filtre à air (11);
une minuterie (16) configurée pour mesurer un temps de fonctionnement de moteur à partir d'un moment où est généré un signal de colmatage de filtre à air par l'interrupteur de colmatage de filtre à air (12);
une mémoire configurée pour mémoriser le temps de fonctionnement de moteur mesuré par la minuterie et pour maintenir la valeur mémorisée, même si un démarrage de moteur est désactivé;
une unité de commande électronique de véhicule (14) configurée pour sortir un signal de commande pour réduire obligatoirement la vitesse de rotation de moteur à une vitesse de rotation de moteur prédéterminée si le filtre à air (11) n'est pas réparé ou remplacé dans un état où le temps de fonctionnement de moteur excède la vitesse de rotation de moteur prédéterminée après que soit généré le signal de colmatage de filtre à air; et
une unité de commande électronique de moteur (13) configurée pour appliquer un signal de commande à une unité d'entraînement de moteur pour réduire la vitesse de rotation de moteur à la vitesse de rotation de moteur prédéterminée selon le signal de commande de l'unité de commande électronique de véhicule (14).

6. Appareil selon la revendication 5, dans lequel l'unité de commande électronique de moteur (13) applique un signal de commande à l'unité d'entraînement de moteur pour réduire la vitesse de rotation de moteur à la vitesse de rotation de moteur prédéterminée si le filtre à air (11) n'est pas réparé ou remplacé après que soit généré le signal de colmatage de filtre à air, et pour réduire davantage la vitesse de rotation de moteur à une autre vitesse de rotation de moteur prédéterminée ayant une valeur inférieure ou une valeur différente de la vitesse de rotation de moteur prédéterminée si le filtre à air (11) n'est pas réparé ou remplacé, même au cas où le temps de fonctionnement de moteur excède un autre temps prédéterminé après que la vitesse de rotation de moteur soit réduite à la vitesse de rotation de moteur prédéterminée.

7. Appareil selon la revendication 5, comprenant par ailleurs une unité de commande électronique de groupe d'instruments (15) notifiant à un opérateur un temps de réparation ou de remplacement du filtre à air (11) ou notifiant à l'opérateur des informations sur la réduction de la vitesse de rotation de moteur à la vitesse de rotation de moteur prédéterminée si le signal de colmatage de filtre à air est généré.
